# EUROPEAN PATENT SPECIFICATION

(11) **EP 0 562 839 B1**
(45) Date of publication and mention of the grant of the patent: **05.03.1997**
(21) Application number: 93302236.0
(22) Date of filing: 24.03.1993
(51) Int. Cl.: G03H 1/02, G03H 1/26

(54) **Multi-layer material for colour hologram and process for producing a colour hologram**
Mehrschicht-Material für Farbhologramme und Verfahren zur Herstellung eines Farbhologramms
Matériau multicouche pour hologrammes en couleurs et procédé pour produire un hologramme en couleurs

(30) Priority: 27.03.1992 JP 70788/92
(43) Date of publication of application: 29.09.1993
(73) Proprietor: NIPPON PAINT CO., LTD., Osaka-shi Osaka 572 (JP)
(72) Inventor: Kawabata, Masami, Takatsuki-shi, Osaka-fu (JP); Sato, Akihiko, Suita-shi, Osaka-fu (JP); Sumiyoshi, Iwao, Osaka-shi, Osaka-fu (JP)
(74) Representative: Perry, Robert Edward

(56) References cited:
- EP-A- 0 346 869
- EP-A- 0 407 773
- US-A- 4 235 505
- US-A- 4 601 533
- DATABASE WPI Week 8745, Derwent Publications Ltd., London, GB; AN 87-319840

## Description

### FIELD OF THE INVENTION

The present invention relates to a multi-layer material for color hologram, and a process for producing a color hologram. More particularly, it relates to a multilayer material for color hologram using a photopolymer as a sensitized material, and a process for producing a color hologram.

### BACKGROUND OF THE INVENTION

A hologram is classified into some kinds according to a recording process of an interference fringe. Among them, a so-called volume hologram in which the interference fringe is recorded according to the difference of refractive index in the inside of a recording layer has recently been used for applications such as three-dimensional display, optical element, etc. because of its high diffraction efficiency and excellent wavelength selectivity.

As the photosensitive material for recording the volume hologram, for example, silver halide or gelatin dichromate have hitherto been used, normally. However, since these materials require wet development or complicated fixing treatment, it is not suitable to produce the hologram industrially. Further, there is a disadvantage that gelatin dichromate has low photosensitivity, and the recorded image is liable to disappear by moisture absorption because gelatin dichromate is easily affected by moisture.

In order to solve the above disadvantage, a photopolymerizable material, so-called photopolymer, has recently been used as a sensitized material.

On the other hand, in order to obtain a hologram image which is almost the same as a real image, a three-color hologram composed of three color images (e.g. red, blue and green) is desired.

As a method for producing the color hologram, for example, there is a method which comprises separately making each hologram having each color, followed by laminating said holograms each other, as described in Japanese Patent Kokai No. 1-107290.

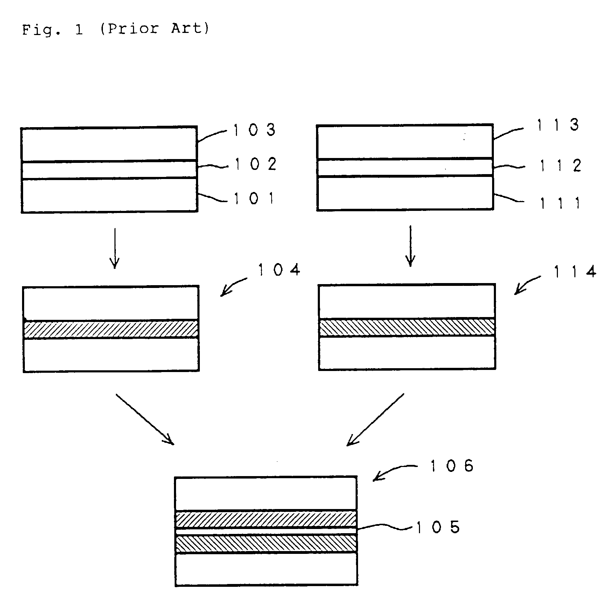

The hologram material used in this method, as shown in Fig. 1, has a substrate layer 101, 111, a photosensitive layer 102, 112 which is sensitized to a light having a specific wavelength and a protective layer 103, 113 in order. In order to obtain a color hologram by this method, it is necessary to use one hologram material for one color. Each hologram material is firstly subjected to interference fringe exposure followed by postexposure to obtain holograms 104, 114 having different colors. Thereafter, the protective layers 103, 113 are respectively removed from the obtained holograms having different colors, which are laminated each other with an adhesive 105 to obtain a color hologram 106. While a preparation example of a two-colour hologram is explained above, a three-colour hologram can also be made in substantially the same manner.

However, it is extremely difficult to achieve accurate lamination, on the hologram, of images having different colours. Therefore, colour fog is liable to arise in production of the hologram, and the process becomes complicated.

Another known process for producing a colour hologram is a multi-recording method, in which plural colour interference fringes are recorded in one hologram material. SU-A-84855254 describes a photographic stock of several layers, each sensitive to a different region of the visible spectrum; after processing, the holograms recorded in the layers are reproduced in sequence by changing the wavelength of the laser light.

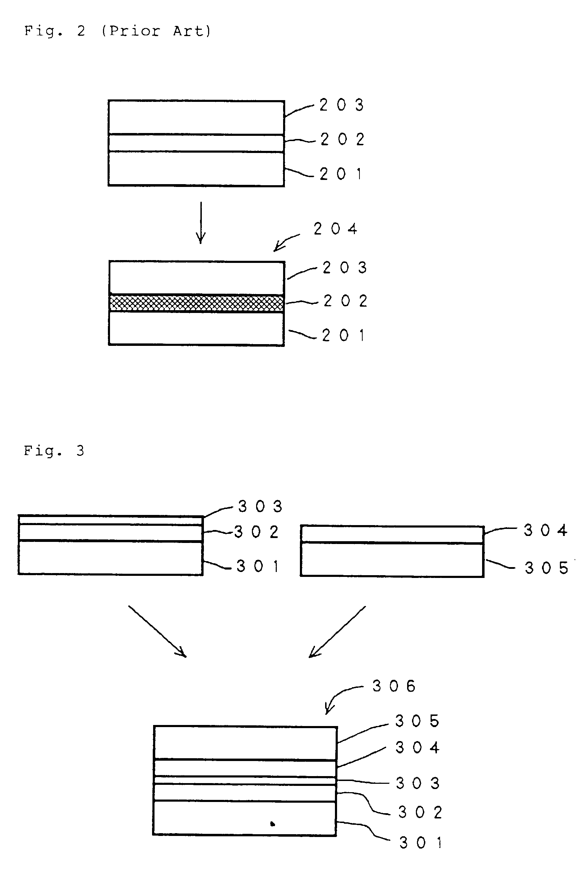

The hologram material used in this multi-recording method, as shown in Fig. 2, has, in order, a substrate layer 201, a photosensitive layer 202 having photosensitivity to lights of various colours, and a protective layer 203. For such a hologram material, interference fringe exposure is firstly conducted successively or simultaneously, using lights of various colours. Then, post-exposure is conducted to obtain a three-colour hologram 204.

However, in this method, diffraction efficiency of the image to be recorded is generally reduced. Accordingly, according to a method wherein two or more interference fringe exposures are conducted on a single photosensitive layer, no clear regenerated image can be obtained. It is particularly difficult to record three or more interference fringes by this method.

In a system using a photopolymerisable photopolymer as a photosensitive layer, interference fringes having different colours may also be recorded by employing the diffusion transfer phenomenon of a monomer. Accordingly, when interference fringe exposure is conducted successively, the viscosity of the photopolymer is increased by recording of the first colour. The photosensitivity of the photopolymer is thereby decreased, on and after recording of the second colour and, therefore, it becomes substantially impossible to record the interference fringe of the third colour.

### SUMMARY OF THE INVENTION

According to the present invention, a multi-layer material for recording a colour hologram, comprises first and second photosensitive layers sandwiched between a substrate and a protective layer, the photosensitive layers having different spectral photosensitivity and being separated from each other by one or more transparent isolation layers which prevent mixing of components contained in the photosensitive layers.

The material of this invention provides a colour hologram having high diffraction efficiency. A clear and bright three-colour image, showing little colour fog, can be obtained by a simple operation.

### DESCRIPTION OF THE INVENTION

The invention will be described below in greater detail with reference to Figures 3-6 of the accompanying drawings, in which:
Figs. 3 and 4 are each flow sheets illustrating processes for producing a multi-layer material of the present invention;
Figs. 5(a) to 5(c) are each flow sheets illustrating the production of a three-colour hologram using a multi-layer material of the present invention; and
Fig. 6 is a schematic diagram illustrating an optical system for making a hologram used in the Examples and Comparative Examples.

The substrate used in the multi-layer material of the present invention is not specifically limited. It may be any having a transparency which does not affect recording of the interference fringe on the photosensitive layer, and a mechanical strength sufficient to support the entire multi-layer material stably. Examples of the substrate include glass plate, acrylic plate and polyethylene terephthalate film.

The photosensitive layer used in the multi-layer material is of a material wherein the interference fringe can be recorded according to the difference of refractive index. A material which can record the interference fringe, using just light, without developing, is preferred. A particularly preferred material is a photopolymer composition comprising a compound having an ethylenically unsaturated double bond and a photopolymerizable initiator.

As the photopolymer composition which can be suitably used for the photosensitive layer, for example, there are photopolymer composition containing a cationic polymerizable compound which is liquid at a normal temperature and a corresponding photopolymerizable initiator as described in Japanese Patent Application No. 3-85177; photopolymer composition comprising a thermoplastic resin, an ethylenically unsaturated liquid monomer and a photopolymerizable initiator as described in Japanese Patent Kokai No. 2-3081; and photopolymer composition comprising a polymer binder (e.g. polyvinyl acetate, etc.), an ethylenically unsaturated monomer (e.g. N-vinylcarbazole, etc.) and a photopolymerizable initiator as described in Japanese Patent Kokai No. 2-3082.

It is important that at least two photosensitive layers, each of which has photosensitivity to light having different wavelength, are formed in the multi-layer material for color hologram of the present invention. These photosensitive layers are separated each other by an isolation layer provided between said photosensitive layers. The isolation layer has a function to prevent the component contained in each photosensitive layer from mixing. Accordingly, it is preferred that a material having transparency which does not affect recording of the interference fringe on the photosensitive layer and is not attacked by the monomer component contained in the photosensitive layer is used as the isolation layer. The material which satisfies the following conditions (a) and (b) is particularly preferred used as the isolation layer.
a) A refractive index difference between one of the transparent isolation layers and the photosensitive layer adjacent to the transparent isolation layer is within ± 0.1. When the refractive index exceeds the above range, an amount of effective light which reaches the photosensitive layer to form an interference fringe is decreased, which results in poor diffraction efficiency.
b) The material has a film thickness of 0.1 µm or more. When the film thickness is smaller than 0.1 µm, a mechanical strength of the isolation layer becomes insufficient, and it is not preferred.

As the material used as the isolation layer, for example, there are polyethylene, polypropylene, polystyrene, polyvinyl alcohol, polyvinyl butyral, polyvinyl acetate, cellulose, nylon, polyvinyl chloride, polyvinylidene chloride, polyethylene terephthalate, polymethyl methacrylate, ionomer, polyurethane elastomer, polycarbonate, polyimide, polyether sulfone, polyvinyl fluoride, glass and the like.

In the case of using the photopolymer as the photosensitive layer, for example, polyethylene, polypropylene, polyvinyl alcohol, nylon and the like are used as the particularly preferred isolation layer. Because these materials has a refractive index which is comparatively closed to that of the material which is normally used as the photosensitive layer and, therefore, it is liable to satisfy the above condition (a).

In order to prevent the photosensitive layer from polymerization inhibition due to oxygen, a protective layer is provided on the photosensitive layer. The material used as the protective layer is not specifically limited and it may be anyone which has transparency which does not affect recording of the interference fringe on the photosensitive layer and has a mechanical strength enough to protect the photosensitive layer, and which substantially isolates adjacent photosensitive layer from oxygen in air. As the preferred protective layer, for example, there can be used the same material as that of the isolation layer. The protective layer can be peeled off after curing the entire photosensitive layer by postexposure.

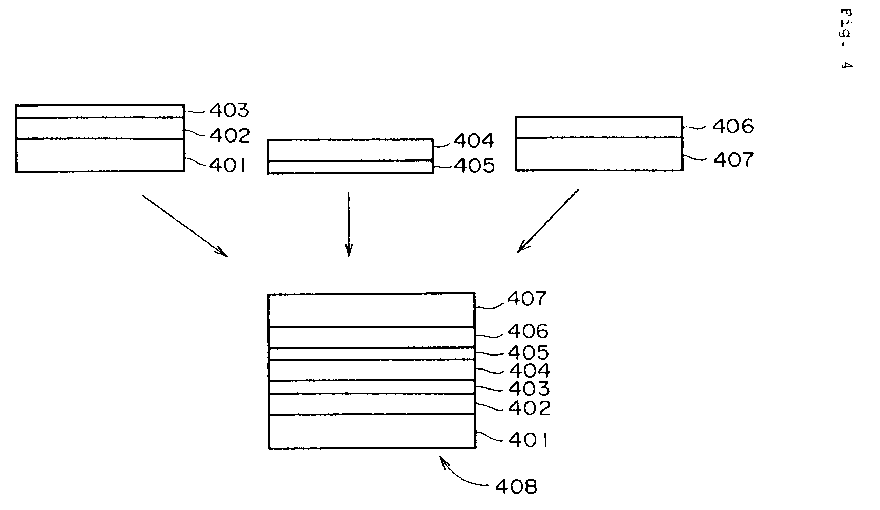

The multi-layer material for color hologram of the present invention can be made by the same method as that used in the production of the conventional material for hologram except that the isolation layer is provided between plural photosensitive layers. For example, the multi-layer material having two photosensitive layers of the present invention can be made as follows. As shown in Fig 3, a solution of a photopolymer composition is firstly applied with a spin coater, bar coater, applicator and the like, and then the solvent is evaporated at a predetermined temperature to form the first photosensitive layer 302 on the substrate layer 301.

It is preferred that a thickness of the photosensitive layer is in the range of 3 to 50 µm. When the thickness of the photosensitive layer is more than 50 µm, it becomes difficult to form an interference fringe due to deterioration of light transmittance, thereby, bright hologram is not obtained. When the thickness is less than 3 µm, the number of the interference fringe becomes small, thereby, bright hologram is not obtained. Thereafter, an isolation layer 303 is provided thereon by laminating the above-mentioned suitable film or applying a solution containing a film-forming material.

Then, according to the same manner as that described above except that a protective layer 305 is used in place of the substrate layer and a solution of a photopolymer composition having different spectral photosensitivity from that of 302 is used, the second photosensitive layer 304 is formed on the protective layer 305.

By laminating the second photosensitive layer 304 of the resulting laminated film on the above isolation layer 303 such that the surface of the second photosensitive layer is contacted with the isolation layer, a multi-layer material for color hologram 306 having two photosensitive layers is obtained.

Regarding a multi-layer material for color hologram having three photosensitive layers, a solution of a photopolymer composition is firstly applied with a spin coater, bar coater, applicator and the like, and then the solvent is evaporated at a predetermined temperature to form the first photosensitive layer 402 on the substrate layer 401, as shown in Fig 4. Thereafter, the first isolation layer 403 is provided thereon by laminating the above-mentioned suitable film or applying a solution containing a film-forming material.

Then, according to the same manner as that described above except that the second isolation layer 405 is used in place of the substrate layer 401 and a solution of a photopolymer composition having different spectral photosensitivity from that of 402 is used, the second photosensitive layer 404 is formed on the isolation layer 405.

Then, according to the same manner as that described above except that a protective layer 407 is used in place of the substrate layer 401 and a solution of a photopolymer composition having different spectral photosensitivity from these of 402 and 404 is used, the third photosensitive layer 406 is formed on the protective layer.

By laminating the resulting three kinds of laminates such that the surface of the first isolation layer 403 is contacted with that of the second photosensitive layer 404 and the surface of the second isolation layer 405 is contacted with that of the third photosensitive layer 406, a multi-layer material for color hologram 408 having three photosensitive layers is obtained.

In the multi-layer material for color hologram of the present invention, since interference fringes of various colors are recorded in a state that plural photosensitive layers are laminated, no shear is arisen in images of various colors. Further, since plural photosensitive layers are separated by the isolation layer, the active species generated in the first photosensitive layer by recording of the first color does not transfer to the other photosensitive layer. Accordingly, viscosity of the photopolymer of the other photosensitive layer does not increase. Thereby, recording on and after recording of the second color can be conducted in high diffraction efficiency just like recording of the first color.

As a result, by using the multi-layer material for color hologram of the present invention, a color hologram which has high diffraction efficiency and a clear and bright color regenerated image showing little fog of color can be provided by a simple operation.

In order to make a color hologram of two colors (e.g. red/green, etc.) two photosensitive layers are made from two kinds of photopolymer compositions having photosensitivity to red and green, respectively, to form a multi-layer material, and an interference fringe is recorded on the multi-layer material successively or simultaneously by two laser beams (e.g. red/green, etc.) according to a known technique. When the photosensitive layer having photosensitivity to red has also photosensitivity to green, it is preferred that a red interference fringe is recorded and then a green interference fringe is recorded. When recording is conducted in reverse order or simultaneously, the green interference fringe is also recorded on the red photosensitive layer, which results in deterioration of recording property of the red interference fringe, and it is not preferred. Thereafter, the recording material wherein the interference fringe is recorded is completely cured by postexposure to obtain a two-color hologram.

The other two-color hologram of two colors (e.g. red/blue, green/blue, etc.) is also made according to the same manner as that described above.

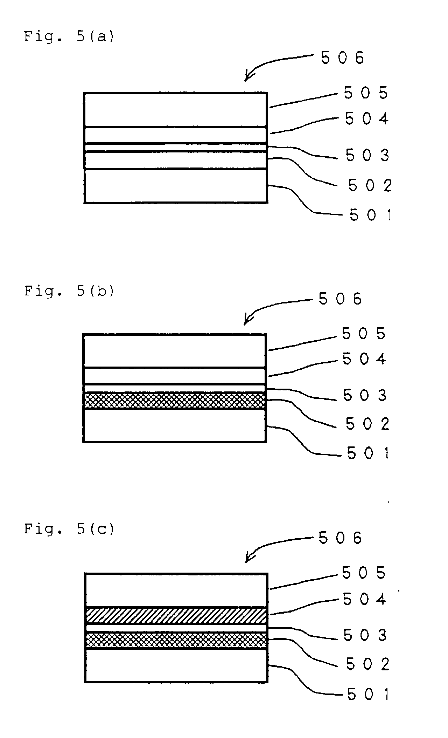

By using the laminated material for color hologram having two photosensitive layers of the present invention, three-color hologram of three colors (e.g. red, green and blue) can be made. As shown in Fig 5(a), a multi-layer material for color hologram 506 having the first photosensitive layer 502 and the second photosensitive layer 504 which are laminated between a substrate layer 501 and a protective layer 505 and are separated by an isolation layer 503 to each other is firstly made. The first photosensitive layer 502 is formed from a photosensitive composition having photosensitivity to red and green, and the second photosensitive layer 502 is formed from a photosensitive composition having photosensitivity to blue. Then, as shown in Fig 5(b), the multi-layer material is simultaneously exposed to red and green laser beams to multiply record red and green interference fringes in the first photosensitive layer 502. Then, as shown in Fig 5(c), an interference fringe is recorded on the second photosensitive layer 504 having photosensitivity to blue by a blue laser beam.

On the other hand, by providing three photosensitive layers having photosensitivity to red, green or blue and recording the interference fringe successively or simultaneously by three laser lights (e.g. red, green and blue), a three-color hologram can also be obtained. When the layer having photosensitivity to red is also photosensitive to green or the layer having photosensitivity to green is also photosensitive to blue, it is preferred that recording is conducted by red, green and blue laser beam in order.

By using plural photosensitive layers wherein space frequency of the interference fringe recorded becomes different even if a laser beam having the same wavelength is irradiated, it is possible to record plural interference fringes simultaneously by only one laser irradiation.

According to the present invention, there is provided a multi-layer material for color hologram having high diffraction efficiency, wherein clear and bright three-color regenerated image showing little fog of color can be obtained by a simple operation, and a process for producing a color hologram using the same.

The following Examples and Comparative Examples further illustrate the present invention in detail but are not to be construed to limit the scope thereof.

### Example 1

A solution containing a photopolymer composition used for making a photosensitive layer was prepared according to the following formulation shown in Table 1.

**Table 1**

| Component | Amount (parts by weight) |
|---|---|
| 3,4-Epoxycyclohexylmethyl-3',4'-epoxycyclohexane carboxylate | 900 |
| Bis(4-acryloxydiethoxyphenyl) methane | 900 |
| Copolymer of methyl methacrylate/ethyl acrylate/2-hydroxyethyl methacrylate (weight ratio: 88/2/10; Mw: about 50,000) | 500 |
| Sensitizer | 5 |
| Diphenyliodonium hexafluoro-antimonate | 60 |
| Ethyl alcohol | 1500 |
| Methyl ethyl ketone | 700 |

A sensitizing solution obtained by adding a compound (DYE-1) of the formula: 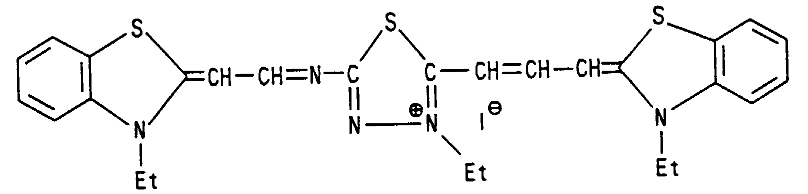 as a sensitizer to the above formulation shown in Table 1 was applied on a glass plate having a thickness of 3 mm with an applicator and the coated plate was dried at 90°C for 5 minutes to form the first photosensitive layer having a thickness of 15 µm. The resulting photosensitive layer mainly showed photosensitivity to red and green lights. On this layer, a polyethylene film having a refractive index of 1.545 was laminated using a roller for laminating to form an isolation layer.

Then, according to the same conditions as that described above, a sensitizing solution obtained by adding anhydro-1-ethyl-4-methoxy-3'-carboxymethyl-5'-chloro-2,2'-quinothiacyanine betaine (DYE-2) as a sensitizer to the formulation shown in Table 1 was applied on a polyethylene film having a thickness of 80 µm used as a protective layer, followed by drying to obtain the second photosensitive layer mainly showing photosensitivity to green and blue lights.

By laminating the photosensitive layer of the laminated film comprising the protective layer and the second photosensitive layer on the isolation layer provided on the first photosensitive layer such that the surface of the photosensitive layer is contacted with the isolation layer, using a roller for laminating, a multi-layer material for color hologram was obtained.

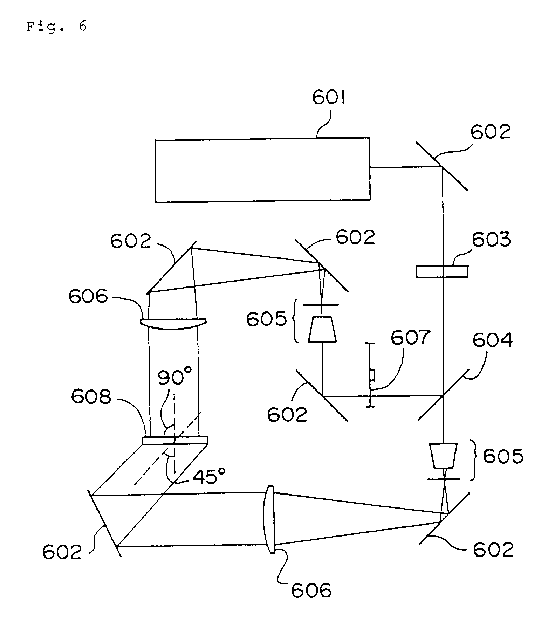

This multi-layer material was disposed on an optical system for making a hologram shown in Fig 6. In Fig 6, 601 is laser, 602 is mirror, 603 is shutter, 604 is half mirror, 605 is spacial filter, 606 is collimator lens, 607 is ND filter and 608 is multi-layer material for color hologram. The multi-layer material was firstly exposed to He-Ne laser beam (wavelength: 632.8 nm) at an exposure energy of 20 mJ/cm² and then exposed to Ar laser beam (wavelength: 514.5 nm) at an exposure energy of 60 mJ/cm² to conduct two light flux interference fringe exposure. Furthermore, a light of 15 W low-pressure mercury vapor lamp was irradiated from the protective layer side for 10 minutes, as postexposure to obtain a hologram. When a white light was irradiated to the hologram of the multi-layer material, a bright and clear diffracted light wherein red color and green color were mixed was observed.

### Example 2

According to the same manner as that described in Example 1 except that the multi-layer material was exposed to He-Ne laser beam (wavelength: 632.8 nm; 20 mJ/cm²) and Ar laser beam (wavelength: 488 nm; 30 mJ/cm²), simultaneously, and then exposed to Ar laser beam (wavelength: 514.5 nm, 60 mJ/cm²), a three-color hologram was obtained. When a white light was irradiated to the hologram of the multi-layer material, a bright and clear diffracted light wherein red color, green color and blue color were mixed was observed.

### Example 3

According to the same manner as that described in Example 1 except that a polyvinyl alcohol film having a thickness of 18 µm and a refractive index of 1.552 was used as the isolation layer, a color hologram was obtained. When a white light was irradiated to the resulting hologram, a bright and clear diffracted light wherein red color and green color were mixed was observed.

### Example 4

According to the same manner as that described in Example 1 except that a polypropylene film having a thickness of 30 µm and a refractive index of 1.516 was used as the isolation layer, a color hologram was obtained. When a white light was irradiated to the resulting hologram, a bright and clear diffracted light wherein red color and green color were mixed was observed.

### Example 5

According to the same manner as that described in Example 1 except that a photosensitive layer showing photosensitivity to a blue light is formed by using 3,3'-carbonylbis(7-diethylaminocumarin) (DYE-3) in place of DYE-2 in the second photosensitive layer and a wavelength of Ar laser beam is changed to 488 nm, a color hologram was obtained. When a white light was irradiated to the resulting hologram, a bright and clear diffracted light wherein red color and blue color were mixed was observed.

### Example 6

According to the same manner as that described in Example 5 except that the multi-layer material was exposed to He-Ne laser beam (wavelength: 632.8 nm; 20 mJ/cm²) and Ar laser beam (wavelength: 514 nm; 40 mJ/cm²), simultaneously, and then exposed to Ar laser beam (wavelength: 488 nm, 60 mJ/cm²), a three-color hologram was obtained. When a white light was irradiated to the resulting hologram, a bright and clear diffracted light wherein red color, green color and green color were mixed was observed.

### Example 7

A sensitizing solution obtained by adding DYE-1 as a sensitizer to the formulation shown in Table 1 was applied on a glass plate having a thickness of 3 mm, followed by drying at 90°C for 5 minutes to form the first photosensitive layer having a thickness of 15 µm. The resulting photosensitive layer mainly showed photosensitivity to red and green color lights. On the first photosensitive layer, a polyethylene film having a thickness of 15 µm and a refractive index of 1.545 was laminated using a roller for laminating to form an isolation layer.

Then, according to the same manner as that described in the formation of the first photosensitive layer except for using DYE-2, the second photosensitive layer was formed on the isolation layer of the polyethylene film having the thickness of 15 µm and the refractive index of 1.545. The photosensitive layer of the laminated film was laminated on the isolation layer provided on the first photosensitive layer such that the surface of the photosensitive layer is contacted with the isolation layer, using a roller for laminating. Then, according to the same manner as that described in the formation of the second photosensitive layer except for using DYE-3, the third photosensitive layer was formed on a protective layer of a polyethylene film having a thickness of 80 µm. By laminating the photosensitive layer of the laminated film comprising the protective layer and the third photosensitive layer on the isolation layer provided on the second photosensitive layer such that the surface of the photosensitive layer is contacted with the isolation layer, using a roller for laminating, a multi-layer material for color hologram having three photosensitive layers was obtained.

According to the same manner as that described in Example 1 except that the multi-layer material was exposed to He-Ne laser beam (wavelength: 632.8 nm; 20 mJ/cm²), Ar laser beam (wavelength: 514.5 nm; 60 mJ/cm²) and Ar laser beam (wavelength: 488 nm, 60 mJ/cm²) in order, three-color hologram was obtained. When a white light was irradiated to the resulting hologram of the multi-layer material, a bright and clear diffracted light wherein red color, green color and blue color were mixed was observed.

### Comparative Example 1

According to the same manner as that described in Example 1 except that one photosensitive layer having photosensitivity to red, green and blue lights which was made from a solution obtained by adding DYE-1 and DYE-2 (5 parts each) to the formulation shown in Table 1 was used, a hologram was obtained. When a white light was irradiated to the hologram, a red diffracted light was observed, but a green diffracted light was hardly observed.

### Comparative Example 2

According to the same manner as that described in Example 1 except that no isolation layer was used and a multi-layer material wherein the first and second photosensitive layer are directly contacted, a hologram was obtained. When a white light was irradiated to the hologram, a red diffracted light was observed, but a green diffracted light was hardly observed.

### Comparative Example 3

According to the same manner as that described in Example 1 except that a polyethylene terephthalate film having a refractive index of 1.650 and a thickness of 16 µm was used in place of the polyethylene film, a hologram was obtained. When a white light was irradiated to the hologram, a diffracted light wherein red color and green color were mixed was observed. However, brightness thereof was remarkably inferior in comparison with Example 1.

The results of the above Examples and Comparative Examples are shown in Table 2. In Examples and Comparative Examples, a film thickness of the photosensitive layer was 14 to 18 µm and a refractive index n_{D}²⁰ was 1.51 to 1.52.

As is apparent from the results, according to the multi-layer material of the present invention, a diffracted light of a corresponding color can be obtained even by exposing to lasers of two or more colors.

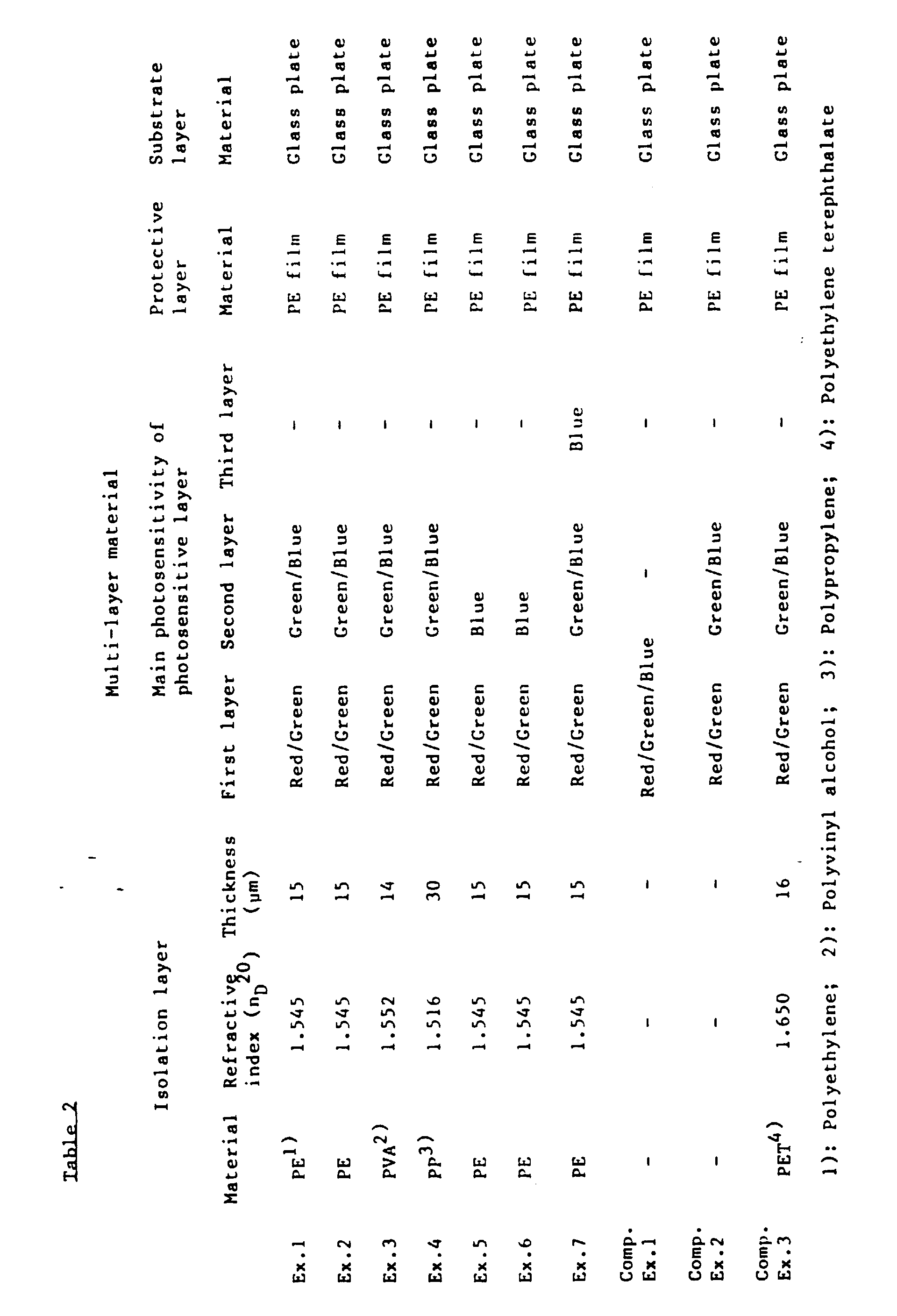

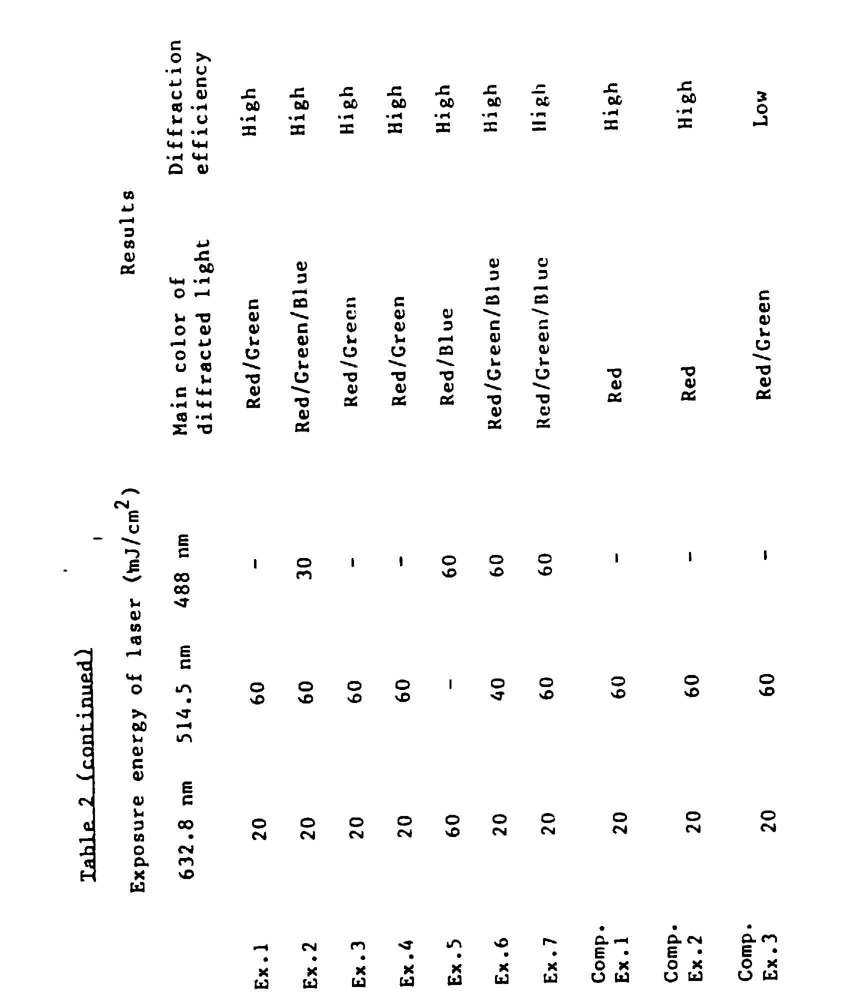

## Claims

1. A multi-layer material (306) for recording a colour hologram, comprising first and second photosensitive layers (302,304) sandwiched between a substrate (301) and a protective layer (305), the photosensitive layers having different spectral photosensitivity and being separated from each other by one or more transparent isolation layers (303) which prevent mixing of components contained in the photosensitive layers.

2. The material of claim 1, comprising, in order, the substrate, the first photosensitive layer, a transparent isolation layer, the second photosensitive layer, and the protective layer.

3. The material of claim 2, further comprising a second transparent isolation layer (405) and a third photosensitive layer (406), in order, between the second transparent isolation layer and the protective layer.

4. The material of any of claims 1 to 3, wherein the transparent isolation layers have a thickness of 0.1 µm or more.

5. The material of any of claims 1 to 4, wherein the refractive index difference between a transparent isolation layer and an adjacent photosensitive layer is less than ± 0.1.

6. The material of any of claims 1 to 5, wherein the transparent isolation layers are formed from polyethylene, polypropylene, polyvinyl alcohol or nylon.

## Patentansprüche

1. Mehrschicht-Material (306) zum Aufzeichnen eines Farbhologramms, das eine erste lichtempfindliche Schicht (302) und eine zweite lichtempfindliche Schicht (304), die beide zwischen einem Substrat (301) und einer Schutzschicht (305) angeordnet sind, umfaßt, wobei die lichtempfindlichen Schichten unterschiedliche spektrale Empfindlichkeiten haben und durch eine oder mehrere transparente Isolierungsschichten (303) voneinander getrennt sind, welche ein Vermischen von Komponenten, die in den lichtempfindlichen Schichten enthalten sind, verhinder.

2. Material nach Anspruch 1, das das Substrat, die erste lichtempfindlichee Schicht, eine transparente Isolierungsschicht, die zweite lichtempfindliche Schicht und die Schutzschicht in der genannten Reihenfolge enthält.

3. Material nach Anspruch 2, das außerdem eine zweite transparente Isolierungsschicht (405) und eine dritte lichtempfindliche Schicht (406) in der genannten Reihenfolge zwischen der zweiten transparenten Isolierungsschicht und der Schutzschicht umfaßt.

4. Material nach einem der Ansprüche 1 bis 3, in dem die transparenten Isolierungsschichten eine Dicke von 0,1 µm oder mehr haben.

5. Material nach einem der Ansprüche 1 bis 4, in dem die Brechungsindex-Differenz zwischen einer transparenten Isolierungsschicht und einer angrenzenden lichtempfindlicheen Schicht weniger als ± 0,1 ist.

6. Material nach einem der Ansprüche 1 bis 5, in dem die transparenten Isolierungsschichten aus Polyethylen, Polypropylen, Polyvinylalkohol oder Nylon gebildet sind.

## Revendications

1. Matériau (306) à couches multiples pour l'enregistrement d'un hologramme en couleurs, comprenant une première et une seconde couches photosensibles (302, 304) placées en sandwich entre un substrat (301) et une couche protectrice (305), les couches photosensibles ayant des photosensibilités spectrales différentes et étant séparées l'une de l'autre par une ou plusieurs couches d'isolation transparentes (303) qui empêchent le mélange des composants contenus dans les couches photosensibles.

2. Matériau selon la revendication 1, comprenant, dans l'ordre, le substrat, la première couche photosensible, une couche d'isolation transparente, la seconde couche photosensible, et la couche protectrice.

3. Matériau selon la revendication 2, comprenant en outre, une seconde couche d'isolation transparente (405) et une troisième couche photosensible (406) dans l'ordre, entre la seconde couche d'isolation transparente et la couche protectrice.

4. Matériau selon l'une quelconque des revendications 1 à 3, dans lequel les couches d'isolation transparentes ont une épaisseur de 0,1 µm ou plus.

5. Matériau selon l'une quelconque des revendications 1 à 4, dans lequel la différence d'indice de réfraction entre une couche transparente d'isolation et une couche photosensible adjacente est inférieure à ± 0,1.

6. Matériau selon l'une quelconque des revendications 1 à 5, dans lequel les couches d'isolation transparentes sont formées de polyéthylène, de polypropylène, de poly(alcool vinylique) ou de Nylon.
